(19) Europäisches Patentamt
European Patent Office
Office européen des brevets

(11) EP 2 745 695 A1

(12) # EUROPEAN PATENT APPLICATION

(43) Date of publication:
**25.06.2014 Bulletin 2014/26**

(21) Application number: **14156594.5**

(22) Date of filing: **16.06.2009**

(51) Int Cl.:
***A01P 13/00*** *(2006.01)* ***A01N 43/40*** *(2006.01)*
***A01N 47/12*** *(2006.01)* ***A01N 47/16*** *(2006.01)*
***A01N 47/18*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.06.2008 EP 08158498**

(62) Document number(s) of the earlier application(s) in accordance with Art. 76 EPC:
**09765827.2 / 2 296 480**

(71) Applicant: **BASF SE**
**67056 Ludwigshafen (DE)**

(72) Inventors:
- **Griveau, Yannick**
  **1652A ALSEMBERG (BE)**
- **Bremer, Hagen**
  **67346 Speyer (DE)**
- **Pfenning, Matthias**
  **67365 Schwegenheim (DE)**

Remarks:
This application was filed on 25-02-2014 as a divisional application to the application mentioned under INID code 62.

(54) **Herbicidal compositions comprising 4-amino-3,6-dichloropyridine-2-carboxylic acid**

(57) Herbicidally active compositions, which comprise 4-amino-3,6-dichloropyridine-2-carboxylic acid (herbicide A) and at least one herbicide B from the group of the lipid biosynthesis inhibitors, a method for controlling undesirable vegetation, their use for controlling undesirable vegetation, and formulations comprising such compositions.

EP 2 745 695 A1

## Description

The present invention relates to herbicidally active compositions, which comprise 4-amino-3,6-dichloropyridine-2-carboxylic acid (common name aminopyralid) and at least one herbicide B from the group of the lipid biosynthesis inhibitors.

In crop protection, it is desirable in principle to increase the specificity and the reliability of the action of active compounds. In particular, it is desirable for the crop protection product to control the harmful plants effectively and, at the same time, to be tolerated by the useful plants in question.

Amino-3,6-dichloropyridine-2-carboxylic acid (common name: aminopyralid; formula I), its manufacture and its herbicidal action was described in WO 01/51468.

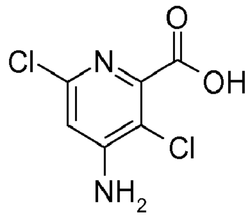

I

Although aminopyralid is a highly effective post-emergence herbicide, in many cases it does not provide a sufficient control of the relevant harmful plants and its activity at low application rates is not always satisfactory. Moreover, aminopyralid is known to have a post-emergence activity. Apart from that, its compatibility with certain dicotyledonous crop plants such as cotton, sunflower, soybean, brassica crops such as canola and oilseed rape and some graminaceous plants such as rice, wheat, rye and barley is not always satisfactory, i.e. in addition to the harmful plants, the crop plants are also damaged to an extent which is not acceptable. Though it is in principle possible to spare crop plants by lowering the application rates, the extent of the control of harmful plants is naturally also reduced.

It is known that combined application of certain different herbicides with specific action might result in an enhanced activity of an herbicide component in comparison with a simple additive action. Such an enhanced activity is also termed a synergism or synergistic activity. As a consequence, it is possible to reduce the application rates of herbicidally active compounds required for controlling the harmful plants.

EP-A 290 354 describes synergistic herbicidal combinations of picolinic acid derivatives and 2-nitrobenzoic acids. Combinations of aminopyralid with certain other herbicides are disclosed in WO 2007/071655 and WO 2007/071730.

WO 2007/112505 describes herbicidal formulations containing a glyceride ester and one or more active ingredients, i.a. aminopyralid.

It is an object of the present invention to provide herbicidal compositions, which show enhanced herbicide action in comparison with the herbicide action of aminopyralid against undesirable harmful plants, in particular against Alopecurus myosuroides, Apera spica-venti, Papaver rohes, Geranium spec, Brassica spec, Avena fatua, Bromus spec., Echinocloa spec. Lolium spec., Phalaris spec., Setaria spec., Digitaria spec., brachiaria spec., Amaranthus spec., Chenopodium spec., Abutilon theophrasti, Galium aparine, Veronica spec., or Solanum spec. and/or to improve their compatibility with crop plants, in particular improved compatibility with wheat, barley, corn (maize), rye, rice, soybean, sunflower, brassica crops and/or cotton. The composition should also have a good pre-emergence herbicidal activity.

We have found that this object is achieved, surprisingly, by herbicidally active compositions comprising

a) aminopyralid, i.e. 4-amino-3,6-dichloropyridine-2-carboxylic acid (hereinafter also referred to as herbicide A); and

b) at least one herbicide B from the group of the lipid biosynthesis inhibitors, which are preferably selected from the groups of the acetamides, chloroacetanilides, thiocarbamates, and benfuresate or perfluidone.

The invention relates in particular to compositions in the form of herbicidally active compositions as defined above.

The invention furthermore relates to the use of compositions as defined herein for controlling undesirable vegetation in crops. When using the compositions of the invention for this purpose the herbicide A and the at least one herbicide B can be applied simultaneously or in succession in crops, where undesirable vegetation may occur.

The invention furthermore relates to the use of compositions as defined herein for controlling undesirable vegetation in crops which, by genetic engineering or by breeding, are resistant to one or more herbicides, e.g. glyphosate and glyfosinate, and/or pathogens such as plant-pathogenous fungi, and/or to attack by insects; preferably resistant to one or more herbicides that act as acetohydroxyacid synthase inhibitors.

The invention furthermore relates to a method for controlling undesirable vegetation, which comprises applying an herbicidal composition according to the present invention to the undesirable plants. Application can be done before, during and/or after, preferably during and/or after, the emergence of the undesirable plants. The herbicide A and the at least one herbicide B can be applied simultaneously or in succession.

The invention in particular relates to a method for controlling undesirable vegetation in crops, which comprises applying an herbicidal composition according to the present invention in crops where undesirable vegetation occurs or might occur.

The invention furthermore relates to a method for controlling undesirable vegetation, which comprises allowing a composition according to the present invention to act on plants, their habitat or on seed.

In the methods of the present invention it is immaterial whether the herbicide A and the at least one herbicide B are formulated and applied jointly or separately, and, in the case of separate application, in which order the application takes place. It is only necessary, that the herbicide A and the at least one herbicide B are applied in a time frame, which allows simultaneous action of the active ingredients on the plants.

The invention also relates to herbicide formulations, which comprises a herbicidally active composition as defined herein and at least one carrier material, including liquid and/or solid carrier materials.

The compositions according to the invention have better herbicidal activity against harmful plants than would have been expected by the herbicidal activity of the individual compounds. In other words, the joint action of aminopyralid and the at least one herbicide B results in an enhanced activity against harmful plants in the sense of a synergy effect (synergism). For this reason, the compositions can, based on the individual components, be used at lower application rates to achieve a herbicidal effect comparable to the individual components. The compositions of the invention also show an accelerated action on harmful plants, i.e. damaging of the harmful plants is achieved more quickly in comparison with application of the individual herbicides. Moreover, the compositions of the present invention provide good pre-emergence herbicidal activity, i.e. the compositions are particularly useful for combating/controlling harmful plants after their emergence. Apart form that, the compositions of the present invention show good crop compatibility, i.e. their use in crops leads to a reduced damage of the crop plants.

As used herein, the terms "controlling" and "combating" are synonyms. As used herein, the terms "undesirable vegetation" and "harmful plants" are synonyms.

The compositions of the invention comprise aminopyralid as a first component a).

As a second component b), the compositions of the invention comprise at least one herbicide B which is selected from the lipid biosynthesis inhibitors according to the groups of the HRAC classification system (see HRAC, Classification of Herbicides According to Mode of Action, http://www.plantprotection.org/hrac/MOA.html). (HRAC Group K3 and N). In one embodiment a herbicide B is present, in another embodiment two herbicides B are present.

In one preferred embodiment of the invention a herbicide B is a lipid biosynthesis inhibitor selected from the acetamides, oxyacetamides, chloroacetamides, thiocarbamates, and benzofuranes.

In one embodiment aminopyralid is combined with an oxyacetamide selected from anilofos, mefenacet, and flufenacet, preferably flufenacet.

In another embodiment aminopyralid is combined with an acetamide selected from diphenamid, napropamide, and naproanilide.

In a more preferred embodiment aminopyralid is combined with a chloroacetamide selected from dimethenamid, dimethenamid-P, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor, xylachlor, pethoxamid, and propisochlor.

A further preferred embodiment of the invention relates to compositions, wherein the chloroacetamide as a herbicide B is dimethenamid-P.

A further preferred embodiment of the invention relates to compositions, wherein the chloroacetamide as a herbicide B is dimethachlor.

A further preferred embodiment of the invention relates to compositions, wherein the chloroacetamide as a herbicide B is metazachlor.

In the compositions according to the invention metazachlor can be used in its monoclinic and its triclinic crystal form or in mixtures of both forms. Monoclinic metazachlor is preferred.

In another embodiment aminopyralid is combined with a thiocarbamate selected from butylate, cycloate, di-allate, dimepiperate, EPTC, esprocarb, molinate, pebulate, prosulfocarb, thiobencarb (benthiocarb), tri-allate and vernolate.

Further preferred embodiments relate to the compositions A-1 to A-117 listed in Table A, where a row of Table A corresponds in each case to a herbicidal composition comprising aminopyralid as herbicide A and the respective herbicide B, which may include a further herbicide B (herbicide B2) stated in the respective row. Preferably, the compositions described comprise the active substances in synergistically effective amounts.

Table A:

| Compositions comprising aminopyralid (herbicide A) and one or two herbicide(s) B | | |
|---|---|---|
| **Mixture** | **Herbicide B** | **Herbicide B2** |
| A-1 | dimethenamid-P | - |
| A-2 | dimethenamid-P | acetochlor |
| A-3 | dimethenamid-P | alachlor |
| A-4 | dimethenamid-P | Butachlor |
| A-5 | dimethenamid-P | Butenachlor |
| A-6 | dimethenamid-P | diethatyl-ethyl |
| A-7 | dimethenamid-P | dimethachlor |
| A-8 | dimethenamid-P | metazachlor |
| A-9 | dimethenamid-P | metolachlor |
| A-10 | dimethenamid-P | S-metolachlor |
| A-11 | dimethenamid-P | Pretilachlor |
| A-12 | dimethenamid-P | propachlor |
| A-13 | dimethenamid-P | prynachlor |
| A-14 | dimethenamid-P | terbuchlor |
| A-15 | dimethenamid-P | thenylchlor |
| A-16 | dimethenamid-P | xylachlor |
| A-17 | dimethachlor | - |
| A-18 | dimethachlor | acetochlor |
| A-19 | dimethachlor | alachlor |
| A-20 | dimethachlor | Butachlor |
| A-21 | dimethachlor | Butenachlor |
| A-22 | dimethachlor | diethatyl-ethyl |
| A-23 | dimethachlor | metazachlor |
| A-24 | dimethachlor | metolachlor |
| A-25 | dimethachlor | S-metolachlor |
| A-26 | dimethachlor | Pretilachlor |
| A-27 | dimethachlor | Propachlor |
| A-28 | dimethachlor | prynachlor |
| A-29 | dimethachlor | terbuchlor |
| A-30 | dimethachlor | thenylchlor |
| A-31 | dimethachlor | xylachlor |
| A-32 | metazachlor | - |
| A-33 | metazachlor | acetochlor |
| A-34 | metazachlor | alachlor |
| A-35 | metazachlor | butachlor |
| A-36 | metazachlor | butenachlor |

(continued)

| Compositions comprising aminopyralid (herbicide A) and one or two herbicide(s) B | | |
|---|---|---|
| **Mixture** | **Herbicide B** | **Herbicide B2** |
| A-37 | metazachlor | diethatyl-ethyl |
| A-38 | metazachlor | metolachlor |
| A-39 | metazachlor | S-metolachlor |
| A-40 | metazachlor | pretilachlor |
| A-41 | metazachlor | propachlor |
| A-42 | metazachlor | prynachlor |
| A-43 | metazachlor | terbuchlor |
| A-44 | metazachlor | thenylchlor |
| A-45 | metazachlor | xylachlor |
| A-46 | pethoxamid | - |
| A-47 | pethoxamid | acetochlor |
| A-48 | pethoxamid | alachlor |
| A-49 | pethoxamid | butachlor |
| A-50 | pethoxamid | butenachlor |
| A-51 | pethoxamid | diethatyl-ethyl |
| A-52 | pethoxamid | dimetachlor |
| A-53 | pethoxamid | dimethenamid-P |
| A-54 | pethoxamid | metazachlor |
| A-55 | pethoxamid | metolachlor |
| A-56 | pethoxamid | S-metolachlor |
| A-57 | pethoxamid | pretilachlor |
| A-58 | pethoxamid | propachlor |
| A-59 | pethoxamid | prynachlor |
| A-60 | pethoxamid | terbuchlor |
| A-61 | pethoxamid | thenylchlor |
| A-62 | pethoxamid | xylachlor |
| A-63 | propisochlor | - |
| A-64 | propisochlor | acetochlor |
| A-65 | propisochlor | alachlor |
| A-66 | propisochlor | butachlor |
| A-67 | propisochlor | butenachlor |
| A-68 | propisochlor | dimetachlor |
| A-69 | propisochlor | dimethenamid-P |
| A-70 | propisochlor | diethatyl-ethyl |
| A-71 | propisochlor | metazachlor |
| A-72 | propisochlor | metolachlor |
| A-73 | propisochlor | S-metolachlor |

(continued)

| Compositions comprising aminopyralid (herbicide A) and one or two herbicide(s) B | | |
|---|---|---|
| **Mixture** | **Herbicide B** | **Herbicide B2** |
| A-74 | propisochlor | pethoxamid |
| A-75 | propisochlor | pretilachlor |
| A-76 | propisochlor | propachlor |
| A-77 | propisochlor | prynachlor |
| A-78 | propisochlor | terbuchlor |
| A-79 | propisochlor | thenylchlor |
| A-80 | propisochlor | xylachlor |
| A-81 | napropamide | - |
| A-82 | napropamide | acetochlor |
| A-83 | napropamide | alachlor |
| A-84 | napropamide | butachlor |
| A-85 | napropamide | butenachlor |
| A-86 | napropamide | dimetachlor |
| A-87 | napropamide | diethatyl-ethyl |
| A-88 | napropamide | metazachlor |
| A-89 | napropamide | metolachlor |
| A-90 | napropamide | S-metolachlor |
| A-91 | napropamide | pethoxamid |
| A-92 | napropamide | pretilachlor |
| A-93 | napropamide | propachlor |
| A-94 | napropamide | propisochlor |
| A-95 | napropamide | prynachlor |
| A-96 | napropamide | terbuchlor |
| A-97 | napropamide | thenylchlor |
| A-98 | napropamide | xylachlor |
| A-99 | flufenacet | - |
| A-100 | flufenacet | acetochlor |
| A-101 | flufenacet | alachlor |
| A-102 | flufenacet | butachlor |
| A-103 | flufenacet | butenachlor |
| A-104 | flufenacet | dimetachlor |
| A-105 | flufenacet | diethatyl-ethyl |
| A-106 | flufenacet | napropamid |
| A-107 | flufenacet | metazachlor |
| A-108 | flufenacet | metolachlor |
| A-109 | flufenacet | S-metolachlor |
| A-110 | flufenacet | pethoxamid |

(continued)

| Compositions comprising aminopyralid (herbicide A) and one or two herbicide(s) B | | |
|---|---|---|
| **Mixture** | **Herbicide B** | **Herbicide B2** |
| A-111 | flufenacet | pretilachlor |
| A-112 | flufenacet | propachlor |
| A-113 | flufenacet | propisochlor |
| A-114 | flufenacet | prynachlor |
| A-115 | flufenacet | terbuchlor |
| A-116 | flufenacet | thenylchlor |
| A-117 | flufenacet | xylachlor |

In the compositions of the present invention the relative weight ratio of aminopyralid to herbicide B is preferably in the range from 1:500 to 500:1, in particular in the range from 1:250 to 250:1 and more preferably from 100:1 to 1:100. Accordingly, in the methods and uses of the invention, aminopyralid and the at least one herbicide B are applied within these weight ratios.

The compositions of the invention may also comprise, as a component c), one or more safeners. Safeners, also termed as herbicide safeners are organic compounds which in some cases lead to better crop plant compatibility when applied jointly with specifically acting herbicides. Some safeners are themselves herbicidally active. In these cases, the safeners act as antidote or antagonist in the crop plants and thus reduce or even prevent damage to the crop plants. However, in the compositions of the present invention, safeners are generally not required. Therefore, a preferred embodiment of the invention relates to compositions which contain no safener or virtually no safener (i.e. less than 1 % by weight, based on the total amount of herbicide A and herbicide B).

Suitable safeners, which can be used in the compositions according to the present invention are known in the art, e.g. from The Compendium of Pesticide Common Names (http://www.alanwood.net/pesticides/); Farm Chemicals Handbook 2000 Vol. 86, Meister Publishing Company, 2000; B. Hock, C. Fedtke, R. R. Schmidt, Herbizide, Georg Thieme Verlag, Stuttgart 1995; W. H. Ahrens, Herbicide Handbook, 7th Edition, Weed Science Society of America, 1994; and K. K. Hatzios, Herbicide Handbook, Supplement to 7th Edition, Weed Science Society of America, 1998.

Safeners include benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloracetyl)-1,3-oxazolidine, 4-(dichloroacetyl)-1-oxa-4-azaspiro[4.5]decane and oxabetrinil, as well as thereof agriculturally acceptable salts and, provided they have a carboxyl group, their agriculturally acceptable derivatives. 2,2,5-Trimethyl-3-(dichloroacetyl)-1,3-oxazolidine [CAS No. 52836-31-4] is also known under the name R-29148. 4-(Dichloroacetyl)-1-oxa-4-azaspiro[4.5]decane [CAS No. 71526-07-03] is also known under the names AD-67 and MON 4660.

As safener, the compositions according to the invention particularly preferably comprise at least one of the compounds selected from the group of benoxacor, cloquintocet, cyprosulfamide, dichlormid, fenchlorazole, fenclorim, fluxofenim, furilazole, isoxadifen, mefenpyr, naphthalic anhydride, 2,2,5-trimethyl-3-(dichloroacetyl)-1,3-oxazolidine, and 4-(dichloroacetyl)-1-oxa-4-azaspiro[4.5]decane and oxabetrinil; and the agriculturally acceptable salt thereof and, in the case of compounds having a COOH group, an agriculturally acceptable derivative as defined below.

A preferred embodiment of the invention relates to compositions which contain no safener or virtually no safener (i.e. less than 1 % by weight, based on the total amount of herbicide A and the at least one herbicide B) is applied.

The compositions of the invention may also comprise, as a component d), one or more, preferably one or two herbicides D which are different from the herbicides A and B. Such further herbicides D may broaden the activity spectrum of the inventive compositions, and may further enhance the activity of the herbicides A and B. One embodiment of the invention relates to compositions which contain no further herbicide D or virtually no further herbicide D (i.e. less than 1 % by weight, based on the total amount of herbicide A and herbicide B). Another embodiment of the invention relates to compositions which contain a further herbicide D.

The further herbicide D, is preferably selected from the groups d.1 to d.6:

d.1 acetohydroxyacid synthase inhibitors, preferably selected from

- imidazolinones, such as imazamox, imazapic, imazapyr, imazaquin and imazethapyr and their salts and their esters;

- sulfonylureas, such as amidosulfuron, azimsulfuron, bensulfuron, chlorimuron, chlorsulfuron, cinosulfuron, cyclosulfamuron, ethametsulfouron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrasosulfuron, rimsulfuron, sulfometuron, sulfosulfuron, thifensulfuron, triasulfuron, tribenuron, trifloxysulfuron, triflusulfuron and tritosulfuron and their salts and, in case the compounds carry a carboxyl group, their esters,
- triazolopyrimidines, such as cloransulam, diclosulam, flumetsulam, florasulam, metosulam, penoxulam and pyroxsulam and their salts and, in case of cloransulam also their esters, and
- pyrimidinylthiobenzoates such as bispyribac, pyribenzowim, pyriftalid, pyrithiobac, pyriminobac,
- sulfonylaminocarbonyltriazolinones, such as flucarbazone, propoxycarbazone and thiencarbazone and their salts;

d.2 auxin herbicides, preferably selected from

- pyridinecarboxylic acids, such as clopyralid or picloram, or
- 2,4-D or benazolin;

d.3 carotenoid biosynthesis inhibitors, preferably selected from benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon, amitrol, topramezone, tembotrione, pyrasulfotole, or picolinafen;
d.4 mitosis inhibitors, preferably selected from

- carbamates, such as asulam, carbetamid, chlorpropham, orbencarb, pronamid (propyzamid), propham, and tiocarbazil,
- dinitroanilines, such as benefin, butralin, dinitramin, ethalfluralin, fluchloralin, oryzalin, pendimethalin, prodiamine and trifluralin,
- pyridines, such as dithiopyr and thiazopyr, and
- butamifos, chlorthal-dimethyl (DCPA) or maleic hydrazide;

d.5 protoporphyrinogen IX oxidase inhibitors, preferably selected from

- diphenyl ethers, such as acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen and oxyfluorfen,
- oxadiazoles, such as oxadiargyl and oxadiazon,
- cyclic imides, such as azafenidin, butafenacil, carfentrazone-ethyl, cinidon-ethyl, flumiclorac-pentyl, flumioxazin, flumipropyn, flupropacil, fluthiacet-methyl, saflufenacil, sulfentrazone and thidiazimin, and
- pyrazoles, such as ET-751, JV 485 and nipyraclofen,

d.6 growth substances, preferably selected from

- aryloxyalkanoic acids, such as 4-DB, clomeprop, dichlorprop, dichlorprop-P (2,4-DP-P), fluoroxypyr, MCPA, MCPB, mecoprop, mecoprop-P, and triclopyr,
- benzoic acids, such as chloramben and dicamba, and
- quinolinecarboxylic acids, such as quinclorac and quinmerac,

d.7 various other herbicides selected from aziprotryn, barban, bensulide, benzthiazuron, benzofluor, buminafos, buthidazole, buturon, cafenstrole, chlorbufam, xhlorofenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, nitralin, oxaciclomefone, phenisopham, piperophos, procyazine, profluralin, pyributicarb, secbumeton, sulfallate (CDEC), terbucarb, triazofenamide, triaziflam or trimeturon.

Herbicides B and D are generally known in the art, from e.g. The Compendium of Pesticide Common Names http://www.alanwood.net/pesticides/.

A further preferred embodiment of the invention relates to compositions containing an acetohydroxyacid synthase inhibitor as herbicide D, which is preferably selected from the imidazolinones.

A further preferred embodiment of the invention relates to compositions containing a auxin herbicide as herbicide D, which is preferably selected from the pyridinecarboxylic acids.

A further preferred embodiment of the invention relates to compositions containing a carotenoid biosynthesis

inhibitor as herbicide D.

A further preferred embodiment of the invention relates to compositions containing a mitosis inhibitoras herbicide D, which is preferably selected from the dinitroanilines and benzamides.

A further preferred embodiment of the invention relates to compositions containing a protoporphyrinogen IX oxidase inhibitor as herbicide D, which is preferably selected from the diphenyl ethers.

A further preferred embodiment of the invention relates to compositions containing a growth substance as herbicide D, which is preferably selected from the quinolinecarboxylic acids. Further preferred embodiments relate to the compositions B-1 to B-345 listed in Table B, where a row of Table B corresponds in each case to a herbicidal composition comprising aminopyralid as herbicide A and the respective herbicide B, which may include a further herbicide (herbicide D) stated in the respective row. Preferably, the compositions described comprise the active substances in synergistically effective amounts.

Table B:

| Compositions comprising aminopyralid (herbicide A) and each one herbicide B and D | | |
|---|---|---|
| **Mixture** | **Herbicide B** | **Herbicide D** |
| B-1 | dimethenamid-P | imazamox |
| B-2 | dimethenamid-P | imazapic |
| B-3 | dimethenamid-P | imazapyr |
| B-4 | dimethenamid-P | imazaquin |
| B-5 | dimethenamid-P | imazethapyr |
| B-6 | dimethenamid-P | amidosulfuron |
| B-7 | dimethenamid-P | Azimsulfuron |
| B-8 | dimethenamid-P | Bensulfuron-methyl |
| B-9 | dimethenamid-P | Chlorimuron-ethyl |
| B-10 | dimethenamid-P | Chlorsulfuron |
| B-11 | dimethenamid-P | Cinosulfuron |
| B-12 | dimethenamid-P | Cyclosulfamuron |
| B-13 | dimethenamid-P | Ethametsulfuron-methyl |
| B-14 | dimethenamid-P | Flazasulfuron |
| B-15 | dimethenamid-P | Flupyrsulfuron-methyl |
| B-16 | dimethenamid-P | Foramsulfuron |
| B-17 | dimethenamid-P | halosulfuron-methyl |
| B-18 | dimethenamid-P | Imazosulfuron |
| B-19 | dimethenamid-P | lodosulfuron |
| B-20 | dimethenamid-P | Mesosulfuron |
| B-21 | dimethenamid-P | Metsulfuron-methyl |
| B-22 | dimethenamid-P | Nicosulfuron |
| B-23 | dimethenamid-P | Oxasulfuron |
| B-24 | dimethenamid-P | Primisulfuron-methyl |
| B-25 | dimethenamid-P | Prosulfuron |
| B-26 | dimethenamid-P | Pyrasosulfuron-ethyl |
| B-27 | dimethenamid-P | Rimsulfuron |
| B-28 | dimethenamid-P | Sulfometuron-methyl |
| B-29 | dimethenamid-P | Sulfosulfuron |

(continued)

| Compositions comprising aminopyralid (herbicide A) and each one herbicide B and D | | |
|---|---|---|
| **Mixture** | **Herbicide B** | **Herbicide D** |
| B-30 | dimethenamid-P | Thifensulfuron-methyl |
| B-31 | dimethenamid-P | Triasulfuron |
| B-32 | dimethenamid-P | Tribenuron-methyl |
| B-33 | dimethenamid-P | Trifloxysulfuron |
| B-34 | dimethenamid-P | Triflusulfuron-methyl |
| B-35 | dimethenamid-P | Tritosulfuron |
| B-36 | dimethenamid-P | Cloransulam-methyl |
| B-37 | dimethenamid-P | Diclosulam |
| B-38 | dimethenamid-P | Florasulam |
| B-39 | dimethenamid-P | Flumetsulam |
| B-40 | dimethenamid-P | Metosulam |
| B-41 | dimethenamid-P | Penoxsulam |
| B-42 | dimethenamid-P | Pyroxsulam |
| B-43 | dimethenamid-P | Flucarbazone-Na |
| B-44 | dimethenamid-P | Propoxycarbazone-Na |
| B-45 | dimethenamid-P | Bispyribac-Na |
| B-46 | dimethenamid-P | Pyribenzoxim |
| B-47 | dimethenamid-P | Pyriftalid |
| B-48 | dimethenamid-P | Pyrithiobac-Na |
| B-49 | dimethenamid-P | Pyiminobac-methyl |
| B-50 | dimethenamid-P | clopyralid |
| B-51 | dimethenamid-P | picloram |
| B-52 | dimethenamid-P | 2,4-D |
| B-53 | dimethenamid-P | benazolin |
| B-54 | dimethenamid-P | clomazone |
| B-55 | dimethenamid-P | benzofenap |
| B-56 | dimethenamid-P | diflufenican |
| B-57 | dimethenamid-P | fluorochloridone |
| B-58 | dimethenamid-P | fluridone |
| B-59 | dimethenamid-P | pyrazolynate |
| B-60 | dimethenamid-P | pyrazoxyfen |
| B-61 | dimethenamid-P | isoxaflutole |
| B-62 | dimethenamid-P | isoxachlortole |
| B-63 | dimethenamid-P | mesotrione |
| B-64 | dimethenamid-P | sulcotrione |
| B-65 | dimethenamid-P | ketospiradox |
| B-66 | dimethenamid-P | flurtamone |

(continued)

| Compositions comprising aminopyralid (herbicide A) and each one herbicide B and D | | |
|---|---|---|
| **Mixture** | **Herbicide B** | **Herbicide D** |
| B-67 | dimethenamid-P | norflurazon |
| B-68 | dimethenamid-P | amitrol |
| B-69 | dimethenamid-P | Topramezone |
| B-70 | dimethenamid-P | Tembotrione |
| B-71 | dimethenamid-P | Pyrasulfotole |
| B-72 | dimethenamid-P | picolinafen |
| B-73 | dimethenamid-P | propyzamid |
| B-74 | dimethenamid-P | carbetamid |
| B-75 | dimethenamid-P | benefin |
| B-76 | dimethenamid-P | butralin |
| B-77 | dimethenamid-P | dinitramin |
| B-78 | dimethenamid-P | ethalfluralin |
| B-79 | dimethenamid-P | fluchloralin |
| B-80 | dimethenamid-P | oryzalin |
| B-81 | dimethenamid-P | pendimethalin |
| B-82 | dimethenamid-P | prodiamine |
| B-83 | dimethenamid-P | trifluralin |
| B-84 | dimethenamid-P | thiazopyr |
| B-85 | dimethenamid-P | acifluorfen-sodium |
| B-86 | dimethenamid-P | bifenox |
| B-87 | dimethenamid-P | chlornitrofen |
| B-88 | dimethenamid-P | ethoxyfen |
| B-89 | dimethenamid-P | fluoroglycofen-ethyl |
| B-90 | dimethenamid-P | fomesafen |
| B-91 | dimethenamid-P | furyloxyfen |
| B-92 | dimethenamid-P | lactofen |
| B-93 | dimethenamid-P | nitrofen |
| B-94 | dimethenamid-P | nitrofluorfen |
| B-95 | dimethenamid-P | oxyfluorfen |
| B-96 | dimethenamid-P | Oxadiargyl |
| B-97 | dimethenamid-P | Oxadiazon |
| B-98 | dimethenamid-P | Azafenidin |
| B-99 | dimethenamid-P | Butafenacil |
| B-100 | dimethenamid-P | Carfentrazone-ethyl |
| B-101 | dimethenamid-P | Cinidon-ethyl |
| B-102 | dimethenamid-P | Flumiclorac-pentyl |
| B-103 | dimethenamid-P | Flumioxazin |

(continued)

| Compositions comprising aminopyralid (herbicide A) and each one herbicide B and D | | |
|---|---|---|
| **Mixture** | **Herbicide B** | **Herbicide D** |
| B-104 | dimethenamid-P | Flumipropyn |
| B-105 | dimethenamid-P | Flupropacil |
| B-106 | dimethenamid-P | Fluthiacet-methyl |
| B-107 | dimethenamid-P | Saflufenacil |
| B-108 | dimethenamid-P | Sulfentrazone |
| B-109 | dimethenamid-P | Thidiazimin |
| B-110 | dimethenamid-P | ET-751 |
| B-111 | dimethenamid-P | JV 485 |
| B-112 | dimethenamid-P | nipyraclofen |
| B-113 | dimethenamid-P | quinclorac |
| B-114 | dimethenamid-P | quinmerac |
| B-115 | dimethachlor | imazamox |
| B-116 | dimethachlor | imazapic |
| B-117 | dimethachlor | imazapyr |
| B-118 | dimethachlor | imazaquin |
| B-119 | dimethachlor | imazethapyr |
| B-120 | dimethachlor | amidosulfuron |
| B-121 | dimethachlor | Azimsulfuron |
| B-122 | dimethachlor | Bensulfuron-methyl |
| B-123 | dimethachlor | Chlorimuron-ethyl |
| B-124 | dimethachlor | Chlorsulfuron |
| B-125 | dimethachlor | Cinosulfuron |
| B-126 | dimethachlor | Cyclosulfamuron |
| B-127 | dimethachlor | Ethametsulfuron-methyl |
| B-128 | dimethachlor | Flazasulfuron |
| B-129 | dimethachlor | Flupyrsulfuron-methyl |
| B-130 | dimethachlor | Foramsulfuron |
| B-131 | dimethachlor | halosulfuron-methyl |
| B-132 | dimethachlor | Imazosulfuron |
| B-133 | dimethachlor | Iodosulfuron |
| B-134 | dimethachlor | Mesosulfuron |
| B-135 | dimethachlor | Metsulfuron-methyl |
| B-136 | dimethachlor | Nicosulfuron |
| B-137 | dimethachlor | Oxasulfuron |
| B-138 | dimethachlor | Primisulfuron-methyl |
| B-139 | dimethachlor | Prosulfuron |
| B-140 | dimethachlor | Pyrasosulfuron-ethyl |

(continued)

| Compositions comprising aminopyralid (herbicide A) and each one herbicide B and D | | |
|---|---|---|
| **Mixture** | **Herbicide B** | **Herbicide D** |
| B-141 | dimethachlor | Rimsulfuron |
| B-142 | dimethachlor | Sulfometuron-methyl |
| B-143 | dimethachlor | Sulfosulfuron |
| B-144 | dimethachlor | Thifensulfuron-methyl |
| B-145 | dimethachlor | Triasulfuron |
| B-146 | dimethachlor | Tribenuron-methyl |
| B-147 | dimethachlor | Trifloxysulfuron |
| B-148 | dimethachlor | Triflusulfuron-methyl |
| B-149 | dimethachlor | Tritosulfuron |
| B-150 | dimethachlor | Cloransulam-methyl |
| B-151 | dimethachlor | Diclosulam |
| B-152 | dimethachlor | Florasulam |
| B-153 | dimethachlor | Flumetsulam |
| B-154 | dimethachlor | Metosulam |
| B-155 | dimethachlor | Penoxsulam |
| B-156 | dimethachlor | Pyroxsulam |
| B-157 | dimethachlor | Flucarbazone-Na |
| B-158 | dimethachlor | Propoxycarbazone-Na |
| B-159 | dimethachlor | Bispyribac-Na |
| B-160 | dimethachlor | Pyribenzoxim |
| B-161 | dimethachlor | Pyriftalid |
| B-162 | dimethachlor | Pyrithiobac-Na |
| B-163 | dimethachlor | Pyiminobac-methyl |
| B-164 | dimethachlor | clopyralid |
| B-165 | dimethachlor | picloram |
| B-166 | dimethachlor | 2,4-D |
| B-167 | dimethachlor | benazolin |
| B-168 | dimethachlor | clomazone |
| B-169 | dimethachlor | benzofenap |
| B-170 | dimethachlor | diflufenican |
| B-171 | dimethachlor | fluorochloridone |
| B-172 | dimethachlor | fluridone |
| B-173 | dimethachlor | pyrazolynate |
| B-174 | dimethachlor | pyrazoxyfen |
| B-175 | dimethachlor | isoxaflutole |
| B-176 | dimethachlor | isoxachlortole |
| B-177 | dimethachlor | mesotrione |

(continued)

| Compositions comprising aminopyralid (herbicide A) and each one herbicide B and D | | |
|---|---|---|
| **Mixture** | **Herbicide B** | **Herbicide D** |
| B-178 | dimethachlor | sulcotrione |
| B-179 | dimethachlor | ketospiradox |
| B-180 | dimethachlor | flurtamone |
| B-181 | dimethachlor | norflurazon |
| B-182 | dimethachlor | amitrol |
| B-183 | dimethachlor | Topramezone |
| B-184 | dimethachlor | Tembotrione |
| B-185 | dimethachlor | Pyrasulfotole |
| B-186 | dimethachlor | picolinafen |
| B-187 | dimethachlor | propyzamid |
| B-188 | dimethachlor | carbetamid |
| B-189 | dimethachlor | benefin |
| B-190 | dimethachlor | butralin |
| B-191 | dimethachlor | dinitramin |
| B-192 | dimethachlor | ethalfluralin |
| B-193 | dimethachlor | fluchloralin |
| B-194 | dimethachlor | oryzalin |
| B-195 | dimethachlor | pendimethalin |
| B-196 | dimethachlor | prodiamine |
| B-197 | dimethachlor | trifluralin |
| B-198 | dimethachlor | thiazopyr |
| B-199 | dimethachlor | acifluorfen-sodium |
| B-200 | dimethachlor | bifenox |
| B-201 | dimethachlor | chlornitrofen |
| B-202 | dimethachlor | ethoxyfen |
| B-203 | dimethachlor | fluoroglycofen-ethyl |
| B-204 | dimethachlor | fomesafen |
| B-205 | dimethachlor | furyloxyfen |
| B-206 | dimethachlor | lactofen |
| B-207 | dimethachlor | nitrofen |
| B-208 | dimethachlor | nitrofluorfen |
| B-209 | dimethachlor | oxyfluorfen |
| B-210 | dimethachlor | Oxadiargyl |
| B-211 | dimethachlor | Oxadiazon |
| B-212 | dimethachlor | Azafenidin |
| B-213 | dimethachlor | Butafenacil |
| B-214 | dimethachlor | Carfentrazone-ethyl |

(continued)

| Compositions comprising aminopyralid (herbicide A) and each one herbicide B and D | | |
|---|---|---|
| **Mixture** | **Herbicide B** | **Herbicide D** |
| B-215 | dimethachlor | Cinidon-ethyl |
| B-216 | dimethachlor | Flumiclorac-pentyl |
| B-217 | dimethachlor | Flumioxazin |
| B-218 | dimethachlor | Flumipropyn |
| B-219 | dimethachlor | Flupropacil |
| B-220 | dimethachlor | Fluthiacet-methyl |
| B-221 | dimethachlor | Saflufenacil |
| B-222 | dimethachlor | Sulfentrazone |
| B-223 | dimethachlor | Thidiazimin |
| B-224 | dimethachlor | ET-751 |
| B-225 | dimethachlor | JV 485 |
| B-226 | dimethachlor | nipyraclofen |
| B-227 | dimethachlor | quinclorac |
| B-228 | dimethachlor | quinmerac |
| B-229 | metazachlor | imazamox |
| B-230 | metazachlor | imazapic |
| B-231 | metazachlor | imazapyr |
| B-232 | metazachlor | imazaquin |
| B-233 | metazachlor | imazethapyr |
| B-234 | metazachlor | amidosulfuron |
| B-235 | metazachlor | Azimsulfuron |
| B-236 | metazachlor | Bensulfuron-methyl |
| B-237 | metazachlor | Chlorimuron-ethyl |
| B-238 | metazachlor | Chlorsulfuron |
| B-239 | metazachlor | Cinosulfuron |
| B-240 | metazachlor | Cyclosulfamuron |
| B-241 | metazachlor | Ethametsulfuron-methyl |
| B-242 | metazachlor | Flazasulfuron |
| B-243 | metazachlor | Flupyrsulfuron-methyl |
| B-244 | metazachlor | Foramsulfuron |
| B-245 | metazachlor | halosulfuron-methyl |
| B-246 | metazachlor | Imazosulfuron |
| B-247 | metazachlor | lodosulfuron |
| B-248 | metazachlor | Mesosulfuron |
| B-249 | metazachlor | Metsulfuron-methyl |
| B-250 | metazachlor | Nicosulfuron |
| B-251 | metazachlor | Oxasulfuron |

(continued)

| Compositions comprising aminopyralid (herbicide A) and each one herbicide B and D | | |
|---|---|---|
| **Mixture** | **Herbicide B** | **Herbicide D** |
| B-252 | metazachlor | Primisulfuron-methyl |
| B-253 | metazachlor | Prosulfuron |
| B-254 | metazachlor | Pyrasosulfuron-ethyl |
| B-255 | metazachlor | Rimsulfuron |
| B-256 | metazachlor | Sulfometuron-methyl |
| B-257 | metazachlor | Sulfosulfuron |
| B-258 | metazachlor | Thifensulfuron-methyl |
| B-259 | metazachlor | Triasulfuron |
| B-260 | metazachlor | Tribenuron-methyl |
| B-261 | metazachlor | Trifloxysulfuron |
| B-262 | metazachlor | Triflusulfuron-methyl |
| B-263 | metazachlor | Tritosulfuron |
| B-264 | metazachlor | Cloransulam-methyl |
| B-265 | metazachlor | Diclosulam |
| B-266 | metazachlor | Florasulam |
| B-267 | metazachlor | Flumetsulam |
| B-268 | metazachlor | Metosulam |
| B-269 | metazachlor | Penoxsulam |
| B-270 | metazachlor | Pyroxsulam |
| B-271 | metazachlor | Flucarbazone-Na |
| B-272 | metazachlor | Propoxycarbazone-Na |
| B-273 | metazachlor | Bispyribac-Na |
| B-274 | metazachlor | Pyribenzoxim |
| B-275 | metazachlor | Pyriftalid |
| B-276 | metazachlor | Pyrithiobac-Na |
| B-277 | metazachlor | Pyiminobac-methyl |
| B-278 | metazachlor | clopyralid |
| B-279 | metazachlor | picloram |
| B-280 | metazachlor | 2,4-D |
| B-281 | metazachlor | benazolin |
| B-282 | metazachlor | clomazone |
| B-283 | metazachlor | benzofenap |
| B-284 | metazachlor | diflufenican |
| B-285 | metazachlor | fluorochloridone |
| B-286 | metazachlor | fluridone |
| B-287 | metazachlor | pyrazolynate |
| B-288 | metazachlor | pyrazoxyfen |

(continued)

| Compositions comprising aminopyralid (herbicide A) and each one herbicide B and D | | |
|---|---|---|
| **Mixture** | **Herbicide B** | **Herbicide D** |
| B-289 | metazachlor | isoxaflutole |
| B-290 | metazachlor | isoxachlortole |
| B-291 | metazachlor | mesotrione |
| B-292 | metazachlor | sulcotrione |
| B-293 | metazachlor | ketospiradox |
| B-294 | metazachlor | flurtamone |
| B-295 | metazachlor | norflurazon |
| B-296 | metazachlor | amitrol |
| B-297 | metazachlor | Topramezone |
| B-298 | metazachlor | Tembotrione |
| B-299 | metazachlor | Pyrasulfotole |
| B-300 | metazachlor | picolinafen |
| B-301 | metazachlor | propyzamid |
| B-302 | metazachlor | carbetamid |
| B-303 | metazachlor | benefin |
| B-304 | metazachlor | butralin |
| B-305 | metazachlor | dinitramin |
| B-306 | metazachlor | ethalfluralin |
| B-307 | metazachlor | fluchloralin |
| B-308 | metazachlor | oryzalin |
| B-309 | metazachlor | pendimethalin |
| B-310 | metazachlor | prodiamine |
| B-311 | metazachlor | trifluralin |
| B-312 | metazachlor | thoazopyr |
| B-313 | metazachlor | acifluorfen-sodium |
| B-314 | metazachlor | bifenox |
| B-315 | metazachlor | chlornitrofen |
| B-316 | metazachlor | ethoxyfen |
| B-317 | metazachlor | fluoroglycofen-ethyl |
| B-318 | metazachlor | fomesafen |
| B-319 | metazachlor | furyloxyfen |
| B-320 | metazachlor | lactofen |
| B-321 | metazachlor | nitrofen |
| B-322 | metazachlor | nitrofluorfen |
| B-323 | metazachlor | oxyfluorfen |
| B-324 | metazachlor | Oxadiargyl |
| B-325 | metazachlor | Oxadiazon |

(continued)

| Compositions comprising aminopyralid (herbicide A) and each one herbicide B and D | | |
|---|---|---|
| **Mixture** | **Herbicide B** | **Herbicide D** |
| B-326 | metazachlor | Azafenidin |
| B-327 | metazachlor | Butafenacil |
| B-328 | metazachlor | Carfentrazone-ethyl |
| B-329 | metazachlor | Cinidon-ethyl |
| B-330 | metazachlor | Flumiclorac-pentyl |
| B-331 | metazachlor | Flumioxazin |
| B-332 | metazachlor | Flumipropyn |
| B-333 | metazachlor | Flupropacil |
| B-334 | metazachlor | Fluthiacet-methyl |
| B-335 | metazachlor | Saflufenacil |
| B-336 | metazachlor | Sulfentrazone |
| B-337 | metazachlor | Thidiazimin |
| B-338 | metazachlor | ET-751 |
| B-339 | metazachlor | JV 485 |
| B-340 | metazachlor | nipyraclofen |
| B-341 | metazachlor | quinclorac |
| B-342 | metazachlor | quinmerac |

If the compounds of herbicide compounds mentioned as herbicides B, herbicides D and safeners (see below) have functional groups, which can be ionized, they can also be used in the form of their agriculturally acceptable salts. In general, the salts of those cations are suitable whose cations have no adverse effect on the action of the active compounds ("agricultural acceptable").

In general, the salts of those cations are suitable whose cations have no adverse effect on the action of the active compounds ("agricultural acceptable"). Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium (hereinafter also termed as organoammonium) in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di(2-hydroxyeth-1-yl)ammonium, benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

In the compositions according to the invention, the compounds that carry a carboxyl group can also be employed in the form of agriculturally acceptable derivatives, for example as amides such as mono- or di-$C_1$-$C_6$-alkylamides or arylamides, as esters, for example as allyl esters, propargyl esters, $C_1$-$C_{10}$-alkyl esters or alkoxyalkyl esters, and also as thioesters, for example as $C_1$-$C_{10}$-alkyl thioesters. Preferred mono- and di-$C_1$-$C_6$-alkylamides are the methyl- and the dimethylamides. Preferred arylamides are, for example, the anilidines and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred $C_1$-$C_4$-alkoxy-$C_1$-$C_4$-alkyl esters are the straight-chain or branched $C_1$-$C_4$-alkoxyethyl esters, for example the methoxyethyl, ethoxyethyl or butoxyethyl esters. An example of the straight-chain or branched $C_1$-$C_{10}$-alkyl thioesters is the ethyl thioester. Preferred derivatives are the esters.

The compositions of the present invention are suitable for controlling a large number of harmful plants, including monocotyledonous weeds, in particular annual weeds such as gramineous weeds (grasses) including Echinochloa species such as barnyardgrass (Echinochloa crusgalli var. crus-galli), Digitaria species such as crabgrass (Digitaria

sanguinalis), Setaria species such as green foxtail (Setaria viridis) and giant foxtail (Setaria faberii), Sorghum species such as johnsongrass (Sorghum halepense Pers.), Avena species such as wild oats (Avena fatua), Cenchrus species such as Cenchrus echinatus, Bromus species, Lolium species, Phalaris species, Eriochloa species, Panicum species, Brachiaria species, annual bluegrass (Poa annua), blackgrass (Alopecurus myosuroides), Aegilops cylindrica, Agropyron repens, Apera spica-venti, Eleusine indica, Cynodon dactylon and the like.

The compositions of the present invention are also suitable for controlling a large number of dicotyledonous weeds, in particular broad leaf weeds including Polygonum species such as wild buckwheat (Polygonum convolvolus), Amaranthus species such as pigweed (Amaranthus retro-flexus), Chenopodium species such as common lambsquarters (Chenopodium album L.), Sida species such as prickly sida (Sida spinosa L.), Ambrosia species such as common ragweed (Ambrosia artemisiifolia), Acanthospermum species, Anthemis species, Atriplex species, Cirsium species, Convolvulus species, Conyza species, Cassia species, Commelina species, Datura species, Euphorbia species, Geranium species, Galinsoga species, morningglory (Ipomoea species), Lamium species, Malva species, Matricaria species, Sysimbrium species, Solanum species, Xanthium species, Veronica species, Viola species, common chickweed (Stellaria media), velvetleaf (Abutilon theophrasti), Hemp sesbania (Sesbania exaltata Cory), Anoda cris-tata, Bidens pilosa, Brassica kaber, Capsella bursa-pastoris, Centaurea cyanus, Galeopsis tetrahit, Galium aparine, Helianthus annuus, Desmodium tortuosum, Kochia scoparia, Mercurialis annua, Myosotis arvensis, Papaver rhoeas, Raphanus raphanistrum, Salsola kali, Sinapis arvensis, Sonchus arvensis, Thlaspi arvense, Tagetes minuta, Richardia brasiliensis, Rumex crispus, Rumex obtusifolius, Heracleaum sphondylium, Aethusa cynapium, Daucus carota, Equisetum arvense and the like.

The compositions of the present invention are also suitable for controlling a large number of annual and perennial sedge weeds including cyperus species such as purple nutsedge (Cyperus rotundus L.), yellow nutsedge (Cyperus esculentus L.), hime-kugu (Cyperus brevifolius H.), sedge weed (Cyperus microiria Steud), rice flatsedge (Cyperus iria L.), and the like.

The compositions according to the present invention are suitable for combating/controlling common harmful plants in useful plants (i.e. in crops). The compositions of the present invention are generally suitable for combating/controlling undesired vegetation in

- Grain crops, including e.g.

    - cereals such as wheat *(Triticum aestivum)* and wheat like crops such as durum (T. durum), einkorn (T. *monococcum),* emmer (T. *dicoccon)* and spelt (T. *spelta),* rye (*Secale cereale*), triticale (*Tritiosecale*), barley (*Hordeum vulgare*);
    - maize (corn; *Zea mays*);
    - sorghum (e.g. *Sorghum bicolour*);
    - rice *(Oryza spp.* such as *Oryza sativa* and *Oryza glaberrima);* and
    - sugar cane;

- Legumes (*Fabaceae*), including e.g. soybeans (Glycine max.), peanuts *(Arachis hypogaea* and pulse crops such as peas including *Pisum sativum,* pigeon pea and cowpea, beans including broad beans *(Vicia faba), Vigna spp.,* and *Phaseolus spp.* and lentils (*lens culinaris var*.);
- brassicaceae, including e.g. canola *(Brassica napus),* oilseed rape *(Brassica napus),* cabbage (*B. oleracea var*.), mustard such as *B. juncea, B. campestris, B. narinosa, B. nigra* and *B. tournefortii;* and turnip (*Brassica rapa var*.);
- other broadleaf crops including e.g. sunflower, cotton, flax, linseed, sugarbeet, potato and tomato;
- TNV-crops (TNV: trees, nuts and vine) including e.g. grapes, citrus, pomefruit, e.g. apple and pear, coffee, pistachio and oilpalm, stonefruit, e.g. peach, almond, walnut, olive, cherry, plum and apricot;
- turf, pasture and rangeland;
- onion and garlic;
- bulb ornamentals such as tulips and narcissus;
- conifers and deciduous trees such as pinus, fir, oak, maple, dogwood, hawthorne, crabapple, and rhamnus (buckthorn); and
- garden ornamentals such as petunia, marigold, roses and snapdragon.

The compositions of the present invention are in particular suitable for combating/controlling undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, pomefruit, such as apple and pear, stonefruit, such as peach, almond, walnut, olive, cherry, plum and apricot, citrus, coffee, pistachio, garden ornamentals, such as roses, petunia, marigold, snap dragon, bulb ornamentals such as tulips and narcissus, conifers and deciduous trees such as pinus, fir, oak, maple, dogwood, hawthorne, crabapple and rhamnus.

The compositions of the present invention are most suitable for combating/controlling undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, stonefruit, such as peach, almond, walnut, olive, cherry, plum and apricot, citrus and pistachio.

If not stated otherwise, the compositions of the invention are suitable for application in any variety of the aforementioned crop plants.

The compositions according to the invention can also be used in crop plants which are resistant to one or more herbicides owing to genetic engineering or breeding, which are resistant to one or more pathogens such as plant pathogenous fungi to genetic engineering or breeding, or which are resistant to attack by insects owing to genetic engineering or breeding. Suitable are for example crop plants, preferably corn, wheat, sunflower, rice, canola, oilseed rape, soybeans or lentils which are resistant to herbicidal AHAS inhibitors, such as, for example, imazamethabenz, imazamox, imazapic, imazapyr, imazaquin, imazethapyr, or sulfonylureas or crop plants which, owing to introduction of the gene for Bt toxin by genetic modification, are resistant to attack by certain insects.

The compositions of the present invention can be applied in conventional manner by using techniques as skilled person is familiar with. Suitable techniques include spraying, atomizing, dusting, spreading or watering. The type of application depends on the intended purpose in a well known manner; in any case, they should ensure the finest possible distribution of the active ingredients according to the invention.

The compositions can be applied pre- or post-emergence, i.e. before, during and/or after emergence of the undesirable plants. When the compositions are used in crops, they can be applied after seeding and before or after the emergence of the crop plants. The compositions invention can, however, also be applied prior to seeding of the crop plants.

It is a particular benefit of the compositions according to the invention that they have a very good pre-emergence herbicide activity, i.e. they show a good herbicidal activity against not yet emerged undesirable plants. Thus, in a preferred embodiment of invention, the compositions are applied pre-emergence, i.e. during and/or after, the emergence of the undesirable plants. It is particularly advantageous to apply the mixtures according to the invention post emergent when the undesirable plant starts with leaf development up to flowering. Since the composition show good crop tolerance, even when the crop has already emerged, they can be applied after seeding of the crop plants and in particular during or after the emergence of the crop plants.

In any case herbicide A and the at least one herbicide B can be applied simultaneously or in succession.

The compositions are applied to the plants mainly by spraying, in particular foliar spraying. Application can be carried out by customary spraying techniques using, for example, water as carrier and spray liquor rates of from about 10 to 2000 l/ha or 50 to 1000 l/ha (for example from 100 to 500 l/ha). Application of the herbicidal compositions by the low-volume and the ultra-low-volume method is possible, as is their application in the form of microgranules.

If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by).

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx. 20 to 1000 l/ha.

The required application rate of the composition of the pure active compounds, i.e. of amino-pyralid, herbicide B and optionally safener or herbicide D depends on the density of the undesired vegetation, on the development stage of the plants, on the climatic conditions of the location where the composition is used and on the application method. In general, the application rate of the composition (total amount of pyroxasulfone, herbicide B and optional further actives) is from 15 to 5000 g/ha, preferably from 20 to 2500 g/ha of active substance.

The required application rates of aminopyralid are generally in the range from 0.1 g/ha to 500 g/ha and preferably in the range from 1 g/ha to 200 g/ha or from 5 g/ha to 100 g/ha of active substance.

The required application rates of the herbicide B (total amount of herbicide B), and herbicide D are generally in the range from 0.1 g/ha to 5000 g/ha and preferably in the range from 1 g/ha to 3000 g/ha or from 2 g/ha to 1500 g/ha of active substance.

The required application rates of the safener, if applied, are generally in the range from 1 g/ha to 5000 g/ha and preferably in the range from 2 g/ha to 5000 g/ha or from 5 g/ha to 5000 g/ha of active substance. Preferably no safener or virtually no safener is applied and thus the application rates are below 5 g/ha, in particular below 2 g/ha or below 1 g/ha.

The compositions of this embodiment are particularly suitable for controlling mono- and dicotyledonous weeds and sedge weeds, in particular Aegilops Cylindrica, Agropyron repens, Alopecurus myosuroides, Avena fatua, Brassica spec., Brachiaria spec., Bromus spec., Echinochloa spec., Lolium spec., Phalaris spec., red rice, Setaria spec., Sorghum spec., Abuthilon theoprasti, Amarantus spec., Brassica kaber, Capsella bursa-pastoris, Chenopodium spec., Cyperus

spec., Euphorbia spec., Geranium sepc., Ipomoea spec., Polygonum spec., Raphanus raphanistrum, Sinapis arevensis, Sysimbrium spec., Thlaspi arvense, Veronica spec.

The compositions of this embodiment are in particular suitable for combating undesired vegetation in wheat, barley, rye, triticale, durum, rice, corn, sugarcane, sorghum, soybean, pulse crops such as pea, bean and lentils, peanut, sunflower, sugarbeet, potato, cotton, brassica crops, such as oilseed rape, canola, mustard, cabbage and turnip, turf, grapes, stonefruit, such as peach, almond, walnut, olive, cherry, plum and apricot, citrus, pistachio, conifers and deciduous treas.

If not stated otherwise, the compositions of this embodiment are suitable for application in any variety of the aforementioned crop plants.

The compositions of this embodiments are most suitable for application in soybean, peanut, puls crops such as pea, bean and lentils, sugarcane, oil palm, conifers and deciduous treas,wheat, barly, rey, triticale, durum, rice, corn, brassica crops.

The compositions of this embodiment can preferably be used in crops which tolerate and/or are resistant to the action of AHAS herbicides, preferably in crops which tolerate and/or are resistant to the action of imidazolinone herbicides and to glyphosate and glypfosinolate. The resistance and or tolerance to said herbicides may be achieved by conventional breeding and/or by genetic engineering methods. Crops which are tolerant to AHAS herbicides (e.g. tolerant to imidazolinone herbicides) are known for example from EP-A 154 204 (MGI Pharma Inc.). Such crops are for example marketed by BASF under the trade name CLEARFIELD. Examples for such crops are maize, canola, oilseed rape, sunflower, rice, soybean, lentils and wheat.

The present invention also relates to formulations of the compositions according to the present invention. The formulations contain, besides the composition, at least one organic or inorganic carrier material. The formulations may also contain, if desired, one or more surfactants and, if desired, one or more further auxiliaries customary for crop protection compositions.

The formulation may be in the form of a single package formulation containing both the herbicide A and the at least one herbicide B together with liquid and/or solid carrier materials, and, if desired, one or more surfactants and, if desired, one or more further auxiliaries customary for crop protection compositions. The formulation may be in the form of a two package formulation, wherein one package contains a formulation of pyroxasulfone while the other package contains a formulation of the at least one herbicide B and wherein both formulations contain at least one carrier material, if desired, one or more surfactants and, if desired, one or more further auxiliaries customary for crop protection compositions. In the case of two package formulations the formulation containing pyroxasulfone and the formulation containing the herbicide B are mixed prior to application. Preferably the mixing is performed as a tank mix, i.e. the formulations are mixed immediately prior or upon dilution with water.

In the formulation of the present invention the active ingredients, i.e. aminopyralid, herbicide B and optional further actives are present in suspended, emulsified or dissolved form. The formulation according to the invention can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. non-aqueous solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers™-types, Borregaard), phenolsulfonic acids, naphthalenesulfonic acids (Morwet types, Akzo Nobel) and dibutylnaphthalenesulfonic acid (Nekal® types, BASF SE), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether,

ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol® types Clariant), polycarboxylates (BASF SE, Sokalan® types), polyalkoxylates, polyvinylamine (BASF SE, Lupamine® types), polyethyleneimine (BASF SE, Lupasol® types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon® SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide® MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active the components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the components a) and b) and optionally safener c) with a solid carrier.

Granules, e.g. coated granules, impregnated granules and homogeneous granules, can be prepared by binding the active ingredients to solid carriers.

The formulations of the invention comprise a herbicidally effective amount of the composition of the present invention. The concentrations of the active the active ingredients in the formulations can be varied within wide ranges. In general, the formulations comprise from 1 to 98% by weight, preferably 10 to 60 % by weight, of active ingredients (sum of pyroxasulfone, herbicide B and optionally further acitves). The active ingredients are employed in a purity of from 90% to 100%, preferably 95% to 100% (according to NMR spectrum).

The active compounds A and B as well as the compositions according to the invention can, for example, be formulated as follows:

1. Products for dilution with water

A Water-soluble concentrates

10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.

B Dispersible concentrates

20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.

C Emulsifiable concentrates

15 parts by weight of active compound (or composition) are dissolved in 75 parts by weight of an organic solvent

(eg. alkylaromatics) with addition of calcium dodecylbenzenesulfonate and castor oil ethoxylate (in each case 5 parts by weight). Dilution with water gives an emulsion. The formulation has an active compound content of 15% by weight.

D Emulsions

25 parts by weight of active compound (or composition) are dissolved in 35 parts by weight of an organic solvent (eg. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

E Suspensions

In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules

50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders

75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.

H Gel formulations

In a ball mill, 20 parts by weight of active compound (or composition), 10 parts by weight of dispersant, 1 part by weight of gelling agent and 70 parts by weight of water or of an organic solvent are mixed to give a fine suspension. Dilution with water gives a stable suspension with active compound content of 20% by weight.

2. Products to be applied undiluted

I Dusts

5 parts by weight of active compound (or composition) are ground finely and mixed intimately with 95 parts by weight of finely divided kaolin. This gives a dusting powder with an active compound content of 5% by weight.

J Granules (GR, FG, GG, MG)

0.5 parts by weight of active compound (or composition) are ground finely and associated with 99.5 parts by weight of carriers. Current methods here are extrusion, spray-drying or the fluidized bed. This gives granules to be applied undiluted with an active compound content of 0.5% by weight.

K ULV solutions (UL)

10 parts by weight of active compound (or composition) are dissolved in 90 parts by weight of an organic solvent, for example xylene. This gives a product to be applied undiluted with an active compound content of 10% by weight.
Aqueous use forms can be prepared from emulsion concentrates, suspensions, pastes, wettable powders or water-dispersible granules by adding water.
It may furthermore be beneficial to apply the compositions of the invention alone or in combination with other

herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives such as non-phytotoxic oils and oil concentrates may also be added.

Use Examples

A. Field trials

The effect of the herbicidal compositions according to the invention of herbicides A (aminopyralid) and B (metazachlor), on the growth of undesirable plants compared to the herbicidally active compounds alone was demonstrated by the following field experiments:

Aminiopyralid was used as commercial aqueous solution having an active ingredient concentration of 240 g/l (Milestone™). Metazachlor was used as a commercial suspension concentrate having an active ingredient concentration of 500 g/l (Butisan S ®).

The plants assessed in the field trials belonged to the following species:

| Code | Scientific Name |
|---|---|
| ALOMY | Alopecurus myosuroides |
| ANTAR | Anthemis arvensis |
| APESV | Apera spica-venti |
| CENCY | Centaurea cyanus |
| GALAP | Galium aparine |
| GERPU | Geranium pusillum |
| MATIN | Matricaria inodora |
| PAPRH | Papaver rhoeas |
| STEME | Stellaria media |
| SINAL | Sinapis alba |
| SSYOF | Sissimbrium officinale |
| VERPE | Veronica persica |

Example 1: Successive application of aminopyralid and metazachlor

The performance of aminopyralid applied as an alone treatment at 15, 30 and 50 g a.i./ha applied as an early post emergence treatment and an post emergence treatment in comparison to two different applications including metazachlor at 500 g a.i./ha as an early post emergence application in succession of aminopyralid as a post emergence application at 15 and 30 g a.i./ha was assessed in an oilseed rape field trials.

The early post emergence treatment was applied by means of fine distributed nozzles at the growth stage (GS) of the crop BBCH 11-12.

The post emergence treatment was applied by means of fine distributed nozzles at the growth stage (GS) of the crop BBCH 13-14.

The test period extended over the autumn and spring season (205 days).

The trials were conducted accordinq to the followinq trial protocol:

| | Early post emergence | Post emergence |
|---|---|---|
| | GS of crop 11-12 | GS of crop 13-14 |
| | g a.i./ha | g a.i./ha |
| Aminopyralid | 15 | |
| Aminopyralid | 30 | |

(continued)

| | Early post emergence | Post emergence |
|---|---|---|
| | GS of crop 11-12 | GS of crop 13-14 |
| | g a.i./ha | g a.i./ha |
| Aminopyralid | 50 | |
| Aminopyralid | | 15 |
| Aminopyralid | | 30 |
| Aminopyralid | | 50 |
| Metazachlor + Aminopyralid | 500 | 15 |
| Metazachlor + Aminopyralid | 500 | 30 |

The table shows that metazachlor and aminopyralid were applied successively.

In the following experiments, the herbicidal activity for the individual herbicide compounds (solo application) and of the herbicidal succession was assessed 4 times:

Table 1: 25 days after treatment (DAT) / 10 days after last treatment (DALT)
Table 2: 65 days after treatment (DAT) / 50 days after last treatment (DALT)
Table 3: 176 days after treatment (DAT) / 161 days after last treatment (DALT)
Table 4: 205 days after treatment (DAT) / 190 days after last treatment (DALT)

The evaluation for the damage on undesired weeds caused by the chemical compositions was carried out using a scale from 0 to 100%, compared to the untreated control plants. Here, 0 means no damage and 100 means complete destruction of the plants.

The evaluation for the damage on the oilseed rape crop, the plant injury or phytotoxicity (PHY-TOX) caused by the chemical compositions was carried out using a scale from 0 to 100%, compared to the untreated control plants. Here, 0 means no damage and 100 means high injury of the plants.

Table 1 treatment: A = 24. September 2007 B= 09. October 2007 Assessment: DAT = 25, DALT = 10

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| treatment | | A | B | | A/B | | A/B |
| PHYTOX | 15 | 11 | 0 | 500+15 | 5 | 500+30 | 13 |
| PHYTOX | 30 | 27 | 0 | | | | |
| PHYTOX | 50 | 40 | 7 | | | | |
| ALOMY | 15 | 0 | 0 | 500+15 | 98 | 500+30 | 100 |
| ALOMY | 30 | 57 | 0 | | | | |
| ALOMY | 50 | 77 | 20 | | | | |
| SINAL | 15 | 13 | 0 | 500+15 | 10 | 500+30 | 13 |
| SINAL | 30 | 50 | 0 | | | | |
| SINAL | 50 | 67 | 0 | | | | |
| PAPRH | 15 | 93 | 72 | 500+15 | 93 | 500+30 | 93 |
| PAPRH | 30 | 98 | 72 | | | | |
| PAPRH | 50 | 100 | 80 | | | | |
| VERPE | 15 | 0 | 0 | 500+15 | 98 | 500+30 | 100 |
| VERPE | 30 | 23 | 0 | | | | |

(continued)

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| treatment | | A | B | | A/B | | A/B |
| VERPE | 50 | 73 | 13 | | | | |
| STEME | 15 | 32 | 12 | 500+15 | 100 | 500+30 | 100 |
| STEME | 30 | 90 | 38 | | | | |
| STEME | 50 | 100 | 67 | | | | |
| MATIN | 15 | 97 | 88 | 500+15 | 100 | 500+30 | 100 |
| MATIN | 30 | 100 | 82 | | | | |
| MATIN | 50 | 100 | 88 | | | | |
| ANTAR | 15 | 97 | 87 | 500+15 | 100 | 500+30 | 100 |
| ANTAR | 30 | 100 | 82 | | | | |
| ANTAR | 50 | 100 | 93 | | | | |
| GALAP | 15 | 67 | 72 | 500+15 | 95 | 500+30 | 100 |
| GALAP | 30 | 92 | 72 | | | | |
| GALAP | 50 | 99 | 87 | | | | |
| GERPU | 15 | 57 | 75 | 500+15 | 90 | 500+30 | 98 |
| GERPU | 30 | 92 | 78 | | | | |
| GERPU | 50 | 98 | 78 | | | | |
| SSYOF | 15 | 33 | 53 | 500+15 | 78 | 500+30 | 97 |
| SSYOF | 30 | 71 | 60 | | | | |
| SSYOF | 50 | 86 | 72 | | | | |

Table 2 treatment: A = 24. September 2007 B= 09. October 2007 Assessment: DAT = 65, DALT = 50

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| Treatment | | A | B | | A/B | | A/B |
| PHYTOX | 15 | 3 | 0 | 500+15 | 0 | 500+30 | 2 |
| PHYTOX | 30 | 30 | 0 | | | | |
| PHYTOX | 50 | 50 | 0 | | | | |
| ALOMY | 15 | 22 | 25 | 500+15 | 98 | 500+30 | 100 |
| ALOMY | 30 | 37 | 32 | | | | |
| ALOMY | 50 | 80 | 42 | | | | |
| APESV | 15 | 28 | 32 | 500+15 | 100 | 500+30 | 100 |
| APESV | 30 | 47 | 38 | | | | |
| APESV | 50 | 85 | 55 | | | | |
| PAPRH | 15 | 93 | 75 | 500+15 | 98 | 500+30 | 100 |
| PAPRH | 30 | 95 | 80 | | | | |

(continued)

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| Treatment | | A | B | | A/B | | A/B |
| PAPRH | 50 | 100 | 85 | | | | |
| VERPE | 15 | 0 | 0 | 500+15 | 99 | 500+30 | 100 |
| VERPE | 30 | 13 | 0 | | | | |
| VERPE | 50 | 50 | 20 | | | | |
| STEME | 15 | 52 | 50 | 500+15 | 100 | 500+30 | 100 |
| STEME | 30 | 97 | 68 | | | | |
| STEME | 50 | 100 | 88 | | | | |
| MATI N | 15 | 96 | 88 | 500+15 | 100 | 500+30 | 100 |
| MATIN | 30 | 98 | 91 | | | | |
| MATIN | 50 | 100 | 94 | | | | |
| ANTAR | 15 | 96 | 87 | 500+15 | 100 | 500+30 | 100 |
| ANTAR | 30 | 98 | 91 | | | | |
| ANTAR | 50 | 100 | 94 | | | | |
| GALAP | 15 | 77 | 78 | 500+15 | 98 | 500+30 | 100 |
| GALAP | 30 | 96 | 78 | | | | |
| GALAP | 50 | 99 | 87 | | | | |
| GERPU | 15 | 72 | 68 | 500+15 | 90 | 500+30 | 99 |
| GERPU | 30 | 90 | 82 | | | | |
| GERPU | 50 | 98 | 83 | | | | |
| SSYOF | 15 | 0 | 0 | 500+15 | 32 | 500+30 | 63 |
| SSYOF | 30 | 25 | 27 | | | | |
| SSYOF | 50 | 50 | 32 | | | | |

Table 3 treatment: A = 24. September 2007 B= 09. October 2007 Assessment: DAT = 176, DALT = 161

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| Treatment | | A | B | | A/B | | A/B |
| PHYTOX | 15 | 2 | 0 | 500+15 | 0 | 500+30 | 0 |
| PHYTOX | 30 | 0 | 0 | | | | |
| PHYTOX | 50 | 0 | 0 | | | | |
| ALOMY | 15 | 22 | 25 | 500+15 | 98 | 500+30 | 99 |
| ALOMY | 30 | 37 | 32 | | | | |
| ALOMY | 50 | 80 | 42 | | | | |
| APESV | 15 | 28 | 32 | 500+15 | 100 | 500+30 | 100 |
| APESV | 30 | 47 | 38 | | | | |

(continued)

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| Treatment | | A | B | | A/B | | A/B |
| APESV | 50 | 85 | 55 | | | | |
| PAPRH | 15 | 96 | 96 | 500+15 | 99 | 500+30 | 99 |
| PAPRH | 30 | 99 | 96 | | | | |
| PAPRH | 50 | 100 | 97 | | | | |
| VERPE | 15 | 0 | 12 | 500+15 | 97 | 500+30 | 97 |
| VERPE | 30 | 12 | 10 | | | | |
| VERPE | 50 | 50 | 30 | | | | |
| STEME | 15 | 93 | 77 | 500+15 | 100 | 500+30 | 100 |
| STEME | 30 | 98 | 95 | | | | |
| STEME | 50 | 100 | 95 | | | | |
| MATIN | 15 | 100 | 98 | 500+15 | 100 | 500+30 | 100 |
| MATIN | 30 | 100 | 100 | | | | |
| MATIN | 50 | 100 | 98 | | | | |
| ANTAR | 15 | 100 | 98 | 500+15 | 100 | 500+30 | 100 |
| ANTAR | 30 | 100 | 100 | | | | |
| ANTAR | 50 | 100 | 98 | | | | |
| GALAP | 15 | 86 | 82 | 500+15 | 98 | 500+30 | 100 |
| GALAP | 30 | 96 | 86 | | | | |
| GALAP | 50 | 100 | 89 | | | | |
| GERPU | 15 | 78 | 75 | 500+15 | 93 | 500+30 | 100 |
| GERPU | 30 | 95 | 93 | | | | |
| GERPU | 50 | 97 | 97 | | | | |
| SSYOF | 15 | 0 | 0 | 500+15 | 32 | 500+30 | 63 |
| SSYOF | 30 | 25 | 27 | | | | |
| SSYOF | 50 | 50 | 32 | | | | |

Table 4 treatment: A = 24. September 2007 B= 09. October 2007 Assessment: DAT = 205, DALT = 190

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| Treatment | | A | B | | A/B | | A/B |
| PHYTOX | 15 | 0 | 0 | 500+15 | 0 | 500+30 | 0 |
| PHYTOX | 30 | 0 | 0 | | | | |
| PHYTOX | 50 | 0 | 0 | | | | |
| ALOMY | 15 | 22 | 38 | 500+15 | 100 | 500+30 | 99 |
| ALOMY | 30 | 37 | 32 | | | | |

(continued)

| | aminopyralid | | | metazachlor +aminopyralid | | metazachlor +aminopyralid | |
|---|---|---|---|---|---|---|---|
| | use rate g ai/ha | | | use rate g ai/ha | | use rate g ai/ha | |
| Treatment | | A | B | | A/B | | A/B |
| ALOMY | 50 | 80 | 42 | | | | |
| APESV | 15 | 28 | 45 | 500+15 | 100 | 500+30 | 100 |
| APESV | 30 | 47 | 38 | | | | |
| APESV | 50 | 85 | 55 | | | | |
| PAPRH | 15 | 97 | 97 | 500+15 | 100 | 500+30 | 100 |
| PAPRH | 30 | 98 | 100 | | | | |
| PAPRH | 50 | 100 | 98 | | | | |
| VERPE | 15 | 0 | 18 | 500+15 | 93 | 500+30 | 92 |
| VERPE | 30 | 12 | 12 | | | | |
| VERPE | 50 | 48 | 33 | | | | |
| STEME | 15 | 93 | 78 | 500+15 | 100 | 500+30 | 100 |
| STEME | 30 | 100 | 98 | | | | |
| STEME | 50 | 100 | 97 | | | | |
| MATIN | 15 | 100 | 100 | 500+15 | 100 | 500+30 | 100 |
| MATIN | 30 | 100 | 100 | | | | |
| MATIN | 50 | 100 | 100 | | | | |
| ANTAR | 15 | 100 | 100 | 500+15 | 100 | 500+30 | 100 |
| ANTAR | 30 | 100 | 100 | | | | |
| ANTAR | 50 | 100 | 100 | | | | |
| GALAP | 15 | 88 | 87 | 500+15 | 95 | 500+30 | 100 |
| GALAP | 30 | 93 | 91 | | | | |
| GALAP | 50 | 100 | 93 | | | | |
| GERPU | 15 | 73 | 73 | 500+15 | 96 | 500+30 | 100 |
| GERPU | 30 | 99 | 96 | | | | |
| GERPU | 50 | 98 | 98 | | | | |
| SSYOF | 15 | 0 | 0 | 500+15 | 42 | 500+30 | 72 |
| SSYOF | 30 | 23 | 50 | | | | |
| SSYOF | 50 | 62 | 52 | | | | |

The value E, which is to be expected if the activity of the individual compounds is just additive, was calculated using the method of S. R. Colby (1967) "Calculating synergistic and antagonistic responses of herbicide combinations", Weeds 15, p. 22 ff.

$$E = X + Y - (X \cdot Y/100)$$

where

X = effect in percent using herbicide A at an application rate a;

Y = effect in percent using herbicide B at an application rate b;
E = expected effect (in %) of A + B at application rates a + b.

If the value observed in this manner is higher than the value E calculated according to Colby, a synergistic effect is present.

Example 2: Combined application of Aminopyralid and Metazachlor

The performance of aminopyralid, applied as an alone treatment at 7,5 and 15g ai/ha, and the performance of metazachlor, applied as an alone treatment at 375 and 500 g ai/ha, as well as the mixtures of the both compounds have been assessed in winter oilseed rape field trials. The trials have been conducted in Germany at two locations.
Post emergence treatment was applied by means of fine distributed nozzels at the growth stage (GS/ BBCH 11/12).

Table 5

| | solo application | | | | combination | | |
|---|---|---|---|---|---|---|---|
| | Aminopyralid (A) | | Metazachlor (B) | | | | COLBY |
| weed | use rate g ai/ha | % activity | use rate g ai/ha | % activity | use rate g ai/ha | % activity | expected % activity |
| | | 28 DAT | | 28 DAT | | 28 DAT | 28 DAT |
| ALOMY | 7,5 | 60 | 500 | 82 | 7,5+500 | 95 | 93 |
| MATIN | 7,5 | 78 | 375 | 42 | 7,5+375 | 95 | 87 |
| MATIN | 7,5 | 78 | 500 | 67 | 7,5+500 | 95 | 93 |
| PAPRH | 15 | 92 | 375 | 50 | 15+375 | 98 | 96 |
| STEME | 7,5 | 75 | 500 | 88 | 7,5+500 | 98 | 97 |
| | | | | | | | |
| | | 72 DAT | | 72 DAT | | 72 DAT | 72 DAT |
| PAPRH | 7,5 | 88 | 375 | 53 | 7,5+375 | 98 | 94 |
| PAPRH | 15 | 97 | 375 | 53 | 15+375 | 100 | 99 |
| | | | | | | | |
| | | 29 DAT | | 29 DAT | | 29 DAT | 29 DAT |
| ANTAR | 7,5 | 77 | 375 | 40 | 7,5+375 | 88 | 86 |
| ANTAR | 15 | 94 | 500 | 57 | 15+500 | 99 | 97 |
| MATIN | 7,5 | 87 | 375 | 88 | 7,5+375 | 100 | 98 |
| PAPRH | 7,5 | 94 | 375 | 55 | 7,5+375 | 99 | 97 |
| PAPRH | 7,5 | 94 | 500 | 75 | 15+500 | 100 | 99 |
| ANTAR | 15 | 96 | 500 | 60 | 15+500 | 99 | 98 |
| PAPRH | 7,5 | 95 | 375 | 55 | 7,5+375 | 99 | 98 |
| CENCY | 7,5 | 98 | 375 | 32 | 7,5+375 | 100 | 99 |

The results of the field trials show that the compositions according to the invention exhibit a reduced phytotox in crops, such as oilseed rape, and a synergistically enhanced efficiacy against weeds.

B. Greenhouse trials

The effects of the herbicidal compositions according to the invention of herbicides A, B and C on the growth of undesirable plants compared to the herbicidal active compounds alone was demonstrated by the following greenhouse experiment
The test plants have been seeded, separately for each species, in plastic containers in sandy loamy soil containing 5% organic matter.
For the post emergence treatment, the plants were first grown to the 2 leaf station (GS 12). Here, the herbicidal compositions were suspended or emulsified in water as distribution medium and sprayed using finely distributing nozzels.

The plants have been cultivated due to there individual requirements at 10 - 25°C and 20 - 35°C. The plants were irrigated due to there necessity.

Aminopyralid was used as commercial aqueous solution having an active ingredient concentration of 240g/l (Milestone ®).

Metazachlor was used as a commercial suspension concentrate having an active ingredient concentration of 500g/l (Butisan S ®).

Dimethenamid-P (DMTA-P) was used as commercial emulsifiable concentrate having an active ingredient concentration of 720g/l (Spectrum ®).

Flufenacet was used as a commercial suspension concentrate having an active ingredient concentration of 500g/l (Cadou ®).

Pethoxamid was used as commercial emulsifiable concentrate having an active ingredient concentration of 600g/l (Successor 600 ®).

Clopyralid was used as commercial aqueous solution having an active ingredient concentration of 100g/l (Lontrel ®).

In the following experiments, the herbicidal activity for the individual herbicide compounds (solo and mixture applications), the herbicidal succession was assessed 14 days after treatment (DAT).

The evaluation for the damage on undesired weeds caused by the chemical compositions was carried out using a scale from 0 to 100%, compared to the untreated control plants. Here, 0 means no damage and 100 means complete destruction of the plants.

The plants used in the greenhouse experiments belonged to the following species:

| Code | Scientific Name |
|---|---|
| CAPBP | Capsella bursa-pasturis |
| LAMPU | Lamium purpureum |
| PAPRH | Papaver rhoeas |
| MERAN | Mercurialis annua |
| MATIN | Matricaria inodora |
| MATCH | Matricaria chamomilla |
| STEME | Stellaria media |
| CENCY | Centauria cyanus |

Calculation of expected activityof binary mixtrues was done by using the Colby-Formula according to Example 1.

Colby calculation for ternary mixtures:

$$E = (X + Y + Z) - \frac{(X*Y + X*Z + Y*Z)}{100} + \frac{(X*Y*Z)}{10000}$$

where:

X = effect in percent using herbicide A at an application rate a;
Y = effect in percent using herbicide B at an application rate b;
Z = effect in percent using herbicide C at an application rate c;
E = expected effect (in %) of A +B +C at application rates a + b +c

Tables 6 to 10 relate to the herbicidal activity, in greenhouse trials, of the individual actives and the combination in post-emergence application 14 DAT.

Table 6: Application in post-emergence aminopyralid and metazachlor

| weed | solo application aminopyralid (A) use rate g ai/ha | % activity | metazachlor (B) use rate g ai/ha | % activity | combination aminopyralid + metazachlor use rate g ai/ha | % activity | COLBY expected % activity |
|---|---|---|---|---|---|---|---|
| | | 28 DAT | | 28 DAT | | 28 DAT | 28 DAT |
| LAMPU | 10 | 30 | 187 | 75 | 10+187 | 95 | 83 |
| LAMPU | 5 | 20 | 187 | 75 | 5+187 | 95 | 80 |
| | | | | | | | |
| MERAN | 10 | 90 | 187 | 15 | 10+187 | 95 | 92 |
| | | | | | | | |
| MATCH | 10 | 85 | 187 | 10 | 10+187 | 95 | 87 |
| MATCH | 5 | 75 | 187 | 10 | 5+187 | 85 | 78 |
| | | | | | | | |
| CENCY | 10 | 85 | 187 | 20 | 10+187 | 95 | 88 |
| CENCY | 5 | 70 | 187 | 20 | 5+187 | 98 | 76 |

Table 7: Application in post-emergence aminopyralid and pethoxamid

| weed | solo application aminopyralid (A) use rate g ai/ha | % activity | pethoxamid (B) use rate g ai/ha | % activity | combination aminopyralid + pethoxamid use rate g ai/ha | % activity | COLBY expected % activity |
|---|---|---|---|---|---|---|---|
| | | 28 DAT | | 28 DAT | | 28 DAT | 28 DAT |
| PAPRH | 10 | 35 | 600 | 25 | 10+600 | 75 | 51 |
| | | | | | | | |
| MERAN | 10 | 75 | 600 | 10 | 10+600 | 85 | 78 |
| MERAN | 10 | 75 | 300 | 0 | 10+300 | 90 | 75 |
| MERAN | 10 | 75 | 150 | 0 | 10+150 | 80 | 75 |
| MERAN | 5 | 40 | 150 | 0 | 5+150 | 50 | 40 |
| CENCY | 10 | 65 | 600 | 30 | 10+600 | 95 | 76 |
| CENCY | 10 | 65 | 300 | 25 | 10+300 | 80 | 74 |
| CENCY | 5 | 60 | 150 | 0 | 10+150 | 75 | 60 |

Table 8: Application in post-emergence aminopyralid and flufenacet

| weed | solo application aminopyralid (A) use rate g ai/ha | % activity | flufenacet (B) use rate g ai/ha | % activity | combination aminopyralid + flufenacet use rate g ai/ha | % activity | COLBY expected % activity |
|---|---|---|---|---|---|---|---|
| | | 28 DAT | | 28 DAT | | 28 DAT | 28 DAT |
| LAMPU | 10 | 65 | 120 | 60 | 10+120 | 90 | 86 |
| LAMPU | 10 | 65 | 60 | 60 | 10+60 | 90 | 86 |
| LAMPU | 5 | 30 | 60 | 60 | 5+60 | 80 | 72 |
| | | | | | | | |
| MATIN | 10 | 80 | 60 | 0 | 10+60 | 90 | 80 |

(continued)

| weed | solo application<br>aminopyralid (A)<br>use rate g ai/ha | % activity | flufenacet (B)<br>use rate g ai/ha | % activity | combination aminopyralid + flufenacet<br>use rate g ai/ha | % activity | COLBY<br>expected % activity |
|---|---|---|---|---|---|---|---|
| | | 28 DAT | | 28 DAT | | 28 DAT | 28 DAT |
| MATIN | 5 | 35 | 60 | 0 | 5+60 | 70 | 35 |
| | | | | | | | |
| STEME | 10 | 65 | 60 | 0 | 10+60 | 70 | 65 |
| STEME | 5 | 35 | 60 | 0 | 5+60 | 55 | 35 |
| | | | | | | | |
| CENCY | 10 | 65 | 120 | 20 | 10+120 | 98 | 72 |
| CENCY | 10 | 65 | 60 | 0 | 10+60 | 90 | 65 |
| CENCY | 5 | 60 | 60 | 0 | 5+60 | 70 | 60 |

Table 9: Application in post-emergence aminopyralid and dimethenamid-P (DMTA-P)

| weed | solo application<br>aminopyralid (A)<br>use rate g ai/ha | % activity | DMTA-P (B)<br>use rate g ai/ha | % activity | combination aminopyralid + DMTA-P<br>use rate g ai/ha | % activity | COLBY<br>expected % activity |
|---|---|---|---|---|---|---|---|
| | | 28 DAT | | 28 DAT | | 28 DAT | 28 DAT |
| MATIN | 10 | 80 | 125 | 0 | 10+125 | 85 | 80 |
| MATIN | 5 | 35 | 125 | 0 | 5+125 | 65 | 35 |
| MATIN | 10 | 80 | 63 | 0 | 10+63 | 85 | 80 |
| MATIN | 5 | 35 | 63 | 0 | 5+63 | 45 | 35 |
| | | | | | | | |
| MERAN | 10 | 75 | 125 | 25 | 10+125 | 90 | 81 |
| MERAN | 5 | 40 | 125 | 25 | 5+125 | 70 | 55 |
| MERAN | 10 | 75 | 63 | 15 | 10+63 | 90 | 79 |
| | | | | | | | |
| CENCY | 10 | 65 | 125 | 20 | 10+125 | 95 | 72 |

Table 10:

| Application in post-emergence aminopyralid and metazachlor + clopyralid | | | | | | | | | |
|---|---|---|---|---|---|---|---|---|---|
| weed | solo application<br>aminopyralid (A)<br>use rate g ai/ha | % activity | metazachlor (B)<br>use rate g ai/ha | % activity | clopyralid (C)<br>use rate g ai/ha | % activity | combination aminopyralid + metazachlor + clopyralid<br>use rate g ai/ha | % activity | COLBY<br>expected % activity |
| | | 28 DAT | | 28 DAT | | 28 DAT | | 28 DAT | 28 DAT |
| LAMPU | 10 | 30 | 187 | 75 | 60 | 15 | 10+187+60 | 90 | 85 |
| LAMPU | 5 | 20 | 187 | 75 | 60 | 15 | 5+187+60 | 90 | 83 |

(continued)

| Application in post-emergence aminopyralid and metazachlor + clopyralid | | | | | | | | | |
|---|---|---|---|---|---|---|---|---|---|
| weed | solo application | | | | | | combination aminopyralid + metazachlor + clopyralid | | |
| | aminopyralid (A) | | metazachlor (B) | | clopyralid (C) | | | | COLBY |
| | use rate g ai/ha | % activity | use rate g ai/ha | % activity | use rate g ai/ha | % activity | use rate g ai/ha | % activity | expected % activity |
| | | 28 DAT | | 28 DAT | | 28 DAT | | 28 DAT | 28 DAT |
| LAMPU | 10 | 30 | 375 | 75 | 120 | 15 | 10+375+120 | 95 | 85 |
| | | | | | | | | | |
| MERAN | 10 | 90 | 187 | 15 | 60 | 15 | 10+187+60 | 95 | 94 |
| MERAN | 5 | 70 | 187 | 15 | 60 | 15 | 5+187+60 | 85 | 83 |
| | | | | | | | | | |
| PAPRH | 10 | 95 | 375 | 30 | 120 | 20 | 10+375+120 | 100 | 97 |
| | | | | | | | | | |
| CAPBP | 10 | 25 | 375 | 25 | 120 | 10 | 10+375+120 | 75 | 49 |

**Claims**

**1.** Herbicidal compositions comprising:

a) a herbicide A which is 4-amino-3,6-dichloropyridine-2-carboxylic acid;
and
b) at least one herbicide B from the group of thiocarbamates.

**2.** Compositions as claimed in claim 1, wherein the thiocarbamate is selected from butylate, cycloate, di-allate, dimepiperate, EPTC, esprocarb, molinate, pebulate, prosulfocarb, thio-bencarb (benthiocarb), tri-allate and vernolate.

**3.** Compositions as claimed in claim 1 or 2, wherein the thiocarbamate is prosulfocarb.

**4.** Compositions as claimed in any of the claims 1 to 3, additionally containing a further herbicide.

**5.** Compositions as claimed in any of claims 1 to 4, additionally containing a safener.

**6.** Compositions as claimed in any of claims 1 to 4, containing no safener.

**7.** Compositions as claimed in any of the preceding claims, wherein the relative amount of herbicide A to the at least one herbicide B is in synergistically effective amounts.

**8.** Compositions as claimed in any of the preceding claims, wherein the relative amount of herbicide A to the at least one herbicide B is from 500:1 to 1:500.

**9.** The use of the compositions as claimed in any of the preceding claims for controlling undesirable vegetation in crop plants.

**10.** The use as claimed in claim 9, wherein the crops are crops of wheat, barley, rye, triticale, durum, rice, corn, sugarcane, sorghum, soybean, pulse crops, peanut, sunflower, sugarbeet, potato, cotton, brassica crops, turf, grapes, pomefruit, stonefruit, citrus, coffee, pistachio, garden ornamentals, bulb ornamentals, conifers and deciduous trees.

**11.** The use of the compositions as claimed in claims 1 to 8 for controlling undesirable vegetation in crops of plants,

where the crop plants are resistant to AHAS inhibitor herbicides.

**12.** A method for controlling undesirable vegetation, which comprises allowing a composition as claimed in claims 1 to 8 to act on plants to be controlled or their habitat.

**13.** A method for controlling undesired vegetation as claimed in claim 12, which comprises applying the composition as claimed in claims 1 to 8 before, during and/or after the emergence of the undesirable plants; the herbicides A and B being applied simultaneously or in succession.

**14.** An herbicide formulation comprising a composition as claimed in any of claims 1 to 8 and at least one solid or liquid carrier.

Europäisches Patentamt
European Patent Office
Office européen des brevets

# EUROPEAN SEARCH REPORT

Application Number
EP 14 15 6594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/058622 A2 (BAYER CROPSCIENCE AG [DE]; MARCELES VICTOR [DE]; EADIE AL [DE]; BICKER) 22 May 2008 (2008-05-22)<br>* claims 1-11; tables 1,2 *<br>----- | 1-14 | INV.<br>A01P13/00<br>A01N43/40<br>A01N47/12<br>A01N47/16<br>A01N47/18 |
| Y | KEES K ET AL: "First Experiences with Boxer (Prosulfocarb) in the Control of Cleavers in Potato Crops",<br>CROPU,<br>1 January 1992 (1992-01-01), XP002454541,<br>* abstract *<br>----- | 1-14 | |
| | | | TECHNICAL FIELDS SEARCHED (IPC) |
| | | | A01N |

The present search report has been drawn up for all claims

1

| Place of search | Date of completion of the search | Examiner |
|---|---|---|
| Munich | 14 May 2014 | Kamdzhilov, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 15 6594

This annex lists the patent family members relating to the patent documents cited in the above-mentioned European search report. The members are as contained in the European Patent Office EDP file on
The European Patent Office is in no way liable for these particulars which are merely given for the purpose of information.

14-05-2014

| Patent document cited in search report | Publication date | Patent family member(s) | Publication date |
|---|---|---|---|
| WO 2008058622 A2 | 22-05-2008 | AR 063600 A1 | 04-02-2009 |
| | | AU 2007321490 A1 | 22-05-2008 |
| | | BR PI0718642 A2 | 26-11-2013 |
| | | CL 32572007 A1 | 23-05-2008 |
| | | CN 101553123 A | 07-10-2009 |
| | | CO 6210743 A2 | 20-10-2010 |
| | | CR 10792 A | 09-06-2009 |
| | | DO P2009000103 A | 31-05-2009 |
| | | EA 200900546 A1 | 30-10-2009 |
| | | EC SP099321 A | 30-06-2009 |
| | | EP 1925203 A1 | 28-05-2008 |
| | | EP 2091332 A2 | 26-08-2009 |
| | | NZ 576879 A | 28-01-2011 |
| | | US 2010041553 A1 | 18-02-2010 |
| | | UY 30716 A1 | 03-07-2008 |
| | | WO 2008058622 A2 | 22-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0151468 A
- EP 290354 A
- WO 2007071655 A
- WO 2007071730 A
- WO 2007112505 A
- EP 154204 A


### Non-patent literature cited in the description


- Farm Chemicals Handbook. Meister Publishing Company, 2000, vol. 86
- **B. HOCK ; C. FEDTKE ; R. R. SCHMIDT.** Herbizide. Georg Thieme Verlag, 1995
- **W. H. AHRENS.** Herbicide Handbook. Weed Science Society of America, 1994
- **K. K. HATZIOS.** Herbicide Handbook. Weed Science Society of America, 1998
- **S. R. COLBY.** Calculating synergistic and antagonistic responses of herbicide combinations. *Weeds,* 1967, vol. 15, 22 ff